(19) Europäisches Patentamt
European Patent Office
Office européen des brevets

(11) Publication number: 0 374 988 A1

(12) **EUROPEAN PATENT APPLICATION**

(21) Application number: 89202879.6

(22) Date of filing: 14.11.89

(51) Int. Cl.5: C08G 69/42, C08L 77/00, C08L 71/12

(30) Priority: 19.11.88 NL 8802861

(43) Date of publication of application: 27.06.90 Bulletin 90/26

(84) Designated Contracting States: AT BE CH DE ES FR GB IT LI NL SE

(71) Applicant: STAMICARBON B.V.
Mijnweg 1
NL-6167 AC Geleen(NL)

(72) Inventor: Koning, Cornelis Eme
Parkstraat 18
NL-6436 EL Schinnen(NL)
Inventor: Vroomans, Hubertus Johannes
Spaanse Singel 18
NL-6191 GK Beek(NL)
Inventor: Van de Vondervoort, Elisabeth Wilhelmina Maria
Aldenhoven 6
NL-6093 HB Heythuysen(NL)
Inventor: Fayt, Roger Michel Andre
Route du Condroz 144
B-4121 Neuville(BE)

(54) **Polyamide-polyarylene polyether composition.**

(57) The invention relates to a composition containing (a) polyamide and (b) polyarylene ether and (c) 0.5-8 wt.% block copolymer of a polylactam in a polyarylene ether. The presence of minor amounts of (c) already has a very favourable effect on the mechanical properties, in particular the tensile strength.

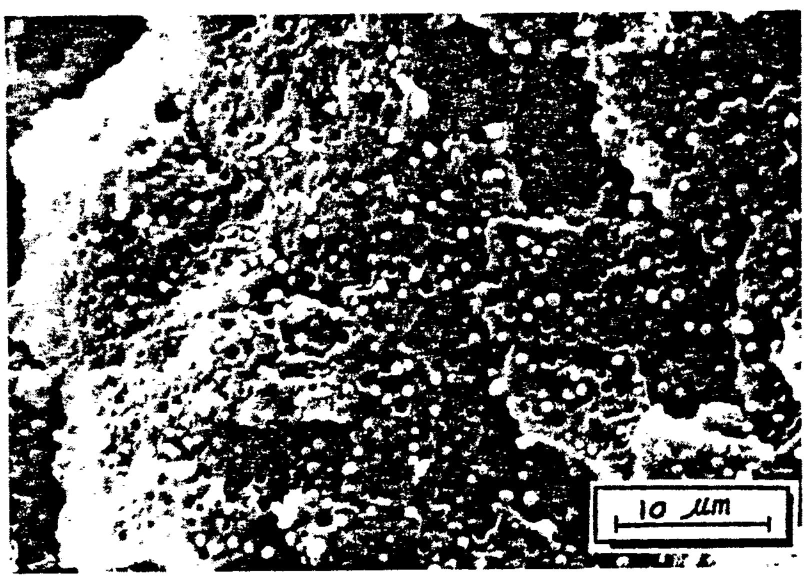


FIG. 3

EP 0 374 988 A1

# POLYAMIDE-POLYARYLENE POLYETHER COMPOSITION

The invention relates to a thermoplastic polymer composition comprising polyamide and polyarylene polyether.

Polyarylene polyethers, and in particular polysulphones, generally have a poor resistance to chemicals while their stress-crack behaviour is not very good. These properties can be improved by incorporating other polymers, but this gives rise to deterioration of other important properties of the polyarylene polyether. In particular the heat distortion temperature (HDT) is greatly affected.

US patent specification A-3,655,822 discloses a composition in which deterioration of the mechanical properties of the polyarylene polyether due to mixing with one or more other polymers occurs only to a lesser degree. The composition according to said patent publication comprises:

a. 10 to 90 wt.% of one or more block copolymers, containing polylactam blocks and polyarylene polyether blocks, and

b. 90 to 10 wt.% of one or more polyamides and/or polyarylene polyethers.

The examples show that at least a total of 45-50 wt.% polysulphone must be present in the mixture to achieve an HDT higher than 100 ºC. To this end about 60 wt.% of polylactam polysulphone block copolymer is to be mixed with polysulphone homopolymer.

The preparation of the polylactam polysulphone block copolymer is described in US-A-3,657,385 and is carried out under strictly controlled conditions in the presence of a catalyst, the resultant product subsequently having to be extracted for a long time so as to isolate the pure block copolymer. Obviously, it is highly preferable to avoid the use of large quantities of block copolymer as needed for the composition according to US-A-3,655,822.

It has now been found that polyamide polyarylene polyether compositions with good mechanical properties and heat stability can be obtained while using only very minor quantities of the aforesaid block copolymer. It is highly surprising that an equivalent HDT level is reached using polysulphone quantities that in total are significantly lower than according to the state of the art.

The polymer composition comprising (a) 5-95 parts by weight of polyamide, (b) 95-5 parts by weight of polyarylene polyether, with (a) + (b) = 100 parts by weight, and (c) a block copolymer of at least one polylactam and at least one polyarylene polyether according to the invention is characterized in that the composition contains 0.5-8.0 wt.% (c), relative to the total of (a) + (b) + (c).

The ratio between the polyamide and the polyarylene polyether in the composition may vary between wide limits and is determined primarily by the properties of the composition that one wishes to achieve. High polyarylene polyether contents have a favourable effect on the heat distortion temperature, whereas the chemical resistance is promoted by a high polyamide content. A person skilled in the art will find a proper balance between these. For an appreciable effect, however, at least 5 parts by weight of the components will have to be present. Preferably at least 10 parts by weight are present, and most preferably the contents are at least 25 parts by weight.

The composition needs to contain only minor amounts of component (c). At least 0.5 wt.% is needed to effect a noticeable improvement in the properties of the mixture of (a) and (b), and preferably the composition contains at least 1 wt.% of component (c). If the composition contains more than 8 wt.% of component (c), then no significant further improvement of the properties of the composition is obtained.

The polyamide (a) in the composition according to the invention comprises all solid polyamide materials, for instance polyamides obtained by polycondensation of diamines and dicarboxylic acids, polyamides obtained by anionic or hydrolytic polymerization of lactam monomers, or polyamides obtained by polycondensation of aminoalkyl carboxylic acids, and mixtures or copolyamides thereof. More specific examples are nylon-6, (poly-ξ-caprolactam), nylon-6.6, (polyhexamethylene adipamide), nylon-12 (12-amino-dodecanoic acid polycondensate).

Preferably the composition contains a polyamide consisting mainly of polyamide 4.6. Mainly here is understood to mean that at least 50%, preferably 80%, of the polyamide consists of tetramethylene adipamide units. Most preferably the homopolymer is used, for in that case the heat distortion temperature and the chemical resistance of the constituent components are combined in an optimum way.

The polyarylene polyethers (b) in the composition according to the invention are solid thermoplastic materials, which can be obtained by reaction of an alkali metal binary salt of, for instance, a substituted or non-substituted dihydroxybenzene compound or a substituted or non-substituted bisphenol or bisphenolic compound, (1), and a substituted or non-substituted dihalide benzene compound, or a substituted or non-substituted dihalide phenyl compound, (2), compound (2) possessing an electron-attracting group in the ortho or para position relevant to the halide groups.

An exhaustive description of the compounds possible for (1) and (2) and of the preparation of polyarylene polyether is presented, inter alia, in the above-mentioned US-A-3,655,822, which by reference forms part of the present specification.

A polyarylene polyether now commercially available in technical quantities is, for instance, polysulphone with as structure:

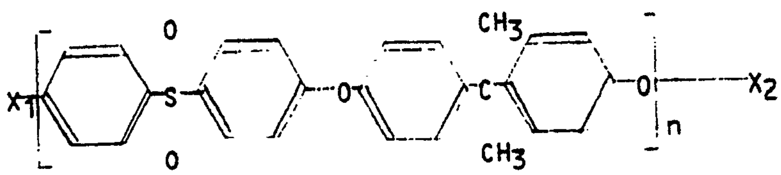

where X1 is OH, Cl or $OCH_3$ and

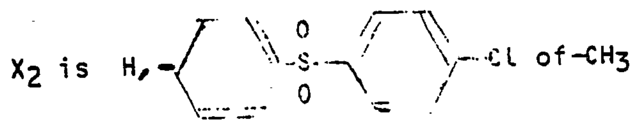

n = 5 to 200
and can be obtained by reaction of the sodium salt of bisphenol A with 4,4′-dichlorodiphenylsulphone.

The block copolymer (c) of the composition according to the invention is a block copolymer of the AB or ABA type, where A represents a polylactam block and B a polyarylene polyether block. In the polymerization reaction both types of block copolymers are generally formed side by side. The preparation of these block copolymers is described in, for instance, US patent specifications A-3,655,822 and 3,657,385. Eligible as polyarylene polyether block are the above-mentioned compounds and further the compounds mentioned in US-A-3,655,822. In principle, all polylactams are eligible for the polylactam blocks.

In the preparation the polyarylene polyether is generally dissolved in a melt of the lactam monomer and the polymerization reaction is carried out at elevated temperature, 130-260 ºC, if desired in the presence of a catalyst, for instance NaH. In the synthesis use can also be made, besides caprolactam, of a high-boiling dispersant, for instance decalin and p-xylene. Any water formed in the reaction is to be discharged immediately, so that the water concentration remains below approximately 0.2 wt.%. It also is necessary to effect the polymerization in an inert atmosphere. When the product obtained upon termination of the polymerization reaction is subjected to an extraction, it is generally found that a substantial portion of the polyarylene polyether has not been incorporated.

According to US-A-3,655,822, for optimum mixing the polyamide and the polyarylene polyether segments in the block copolymer preferably correspond with the polyamide (a) and the polyarylene polyether (b) of the composition.

The polymer composition according to the invention can be obtained from the constituent parts (a), (b) and (c) by using conventional methods and equipment. In this process, (a), (b) and (c) can together or in separate combinations be dry-blended and subsequently melted or mixed in the melt. The equipment used includes rollers, extruders, Banbury mixers, to which the components can be fed separately or simultaneously. It is also possible, for instance, to first mix (a) with (c) and then add (b) or to mix (a) with a portion of (c) and (b) with the remainder of (c) and subsequently mixing these two fractions, etc.

The composition according to the invention can, if desired, comprise several other materials besides the constituent parts (a), (b) and (c), for instance fillers, reinforcing fibre materials, dyes, pigments, stabilizers, impact modifiers, flame retardants and other polymers.

The composition according to the invention can, inter alia, be applied in electrical components.

The invention will now be elucidated on the basis of the following examples and comparative examples, without being restricted thereto.

- Block copolymer (c).

Preparation of C1 block copolymer

Under a nitrogen atmosphere 130 g polysulphone (Udel P 1700[R], Union Carbide) and 130 g ε-

caprolactam were mixed with 150 ml benzene in a 500 ml flanged flask. The mixture was heated by means of an oil bath $T_{oil}$ = 200 ¤C), so that the benzene and any traces of water were distilled off azeotropically. The remaining dry mixture was stirred and during stirring 1.1 g NaH was added. After 10 minutes stirring was stopped and after 20 minutes heating was stopped.

The highly viscous reaction mixture was subsequently slowly cooled to room temperature.

The cooled reaction product was ground and exhaustively extracted with methanol so as to remove unreacted ξ-caprolactam.

After this extraction the total yield of block copolymerizate was 229 g. It was used in examples I and II.

Preparation of block copolymer (C2)

Under a nitrogen atmosphere 300 g polysulphone udel P 1700[R], Union Carbide) and 300 g ξ-caprolactam were mixed with 750 ml toluene in a 1 l flanged flask.

The mixture was heated by means of an oil bath ($T_{oil}$ = 180 ¤C), so that the toluene and any traces of water present were distilled off azeotropically. The remaining dry mixture was stirred and during stirring 2.6 g NaH was added. After 5 minutes stirring and heating were stopped.

The highly viscous reaction mixture was subsequently slowly cooled to room temperature.

The cooled reaction product was ground and exhaustively extracted with methanol so as to remove unreacted ξ-caprolactam. After this extraction the total yield of block copolymerizate was 510 g. It was used in examples III to VII inclusive.

Exhaustive extraction of a portion of the block copolymerizate showed the presence of 23 mass % chloroform-soluble material, presumably mainly homosulphone, and 8 mass % formic acid - soluble material, presumably mainly homo polyamide 6 or block copolymer that is very rich in polyamide 6.

- Polyamide (a)

polyamide 4.6 λrel = 3.2. STANYL: from DSM, Holland

polyamide 6, ULTRAMID B3 from BASF, Germany, λrel = 2.7

- Polyarylene polyether (b)

polysulphone (PSU)UDEL P 1700 from Union Carbide, USA.

Examples I and II

C1 block copolymer and polysulphone were processed into a masterbatch in a twin-screw extruder. The compounding temperature was set at 320-330 ºC. In the masterbatch 85.7 parts by weight of (b) and 14.3 parts by weight of (c) were incorporated. This masterbatch was used for examples I and II. The compositions obtained were used for injection moulding of test bars for mechanical testing. This was done in an injection moulding machine with a melt temperature of 315 ¤C and a mould temperature of 80 ¤C.

Table 1 presents the compositions and the results.

In the comparative examples A and B the ratio between parts by weight of (a) and (b) is the same as in examples I and II, respectively. However, no block copolymer was used.

Table 1

| Composition [parts by weight] | Example I | Comp. example A | Example II | Comp. example B |
|---|---|---|---|---|
| polyamide 6 | 70.0 | 70.0 | | |
| polyamide 4.6 | | | 70.0 | 70.0 |
| polysulphone | | 30.0 | | 30.0 |
| masterbatch | 35.0 | | 35.0 | |
| Properties: | | | | |
| Izod, notched 23¤C [kJ/m2] | 4.8 | 2.4 | 5.6 | 2.8 |
| flexural modulus [N/mm2] | 2910 | 2975 | 2925 | 2835 |
| flexural strength [N/mm2] | 106 | 89 | – | |
| (bending test) | | | | |
| tensile strength [N/mm2] | | | | 71 |
| (tensile test) | | | | |
| elongation at break (%) | | | | 10 |
| HDT [¤C] | 101 | | 157 | |

Application of only about 5% C1 block copolymer in example I already yields a very strong improvement of the impact resistance and the flexural strength in comparison with the composition of comparative example A, in which no block copolymer is present.

The value of the heat distortion temperature (HDT) of example I is significantly higher than that of compositions with a similar polysulphone content according to the state of the art in Table II of US-A-3.655.822 (blend B 40% polysulphone, HDT = 78 ¤C).

Examples III-VIII, comparative examples C and D

Using the same equipment and conditions as in examples I and II, while omitting the intermediate masterbatch step, the compositions of Table 2 were compounded and test bars were injection moulded.

The dependence of the mechanical properties on the block copolymer and polysulphone contents in the composition follows from the examples III to VIII inclusive. Comparative examples C and D give the properties of the polyamide 4.6 and polysulphone starting materials.

It is surprising that, contrary to what is stated in US-A-3.655.822, column 4, lines 5-11, with the minor amounts of block copolymer on the basis of poly-ξ-caprolactam used, such excellent results are achieved in compositions with polyamide 4.6, which differs from poly-ξ-caprolactam.

Table 2

| Composition [parts by weight] | III | IV | V | VI | VII | VIII | C | D |
|---|---|---|---|---|---|---|---|---|
| polyamide 4.6 | 68.6 | 67.2 | 64.4 | 48.0 | 46.0 | 28.8 | 100 | - |
| polysulphone | 29.4 | 28.8 | 27.6 | 48.0 | 46.0 | 67.2 | - | 100 |
| C2 block copolymer | 2.0 | 4.0 | 8.0 | 4.0 | 8.0 | 4.0 | - | - |
| Properties: | | | | | | | | |
| Izod, notched 23°C [kJ/m$^2$] | 4.2 | 5.8 | 7.2 | 4.0 | 5.7 | 2.4 | 8.4 | 7.0 |
| flexural modulus [N/mm$^2$] | 2910 | 2900 | 2920 | 2865 | 2860 | 2975 | 3200 | 2690 |
| (bending test) | | | | | | | | |
| tensile strength [N/mm$^2$] | 84 | 85 | 85 | 70 | 78 | | 80 | 72 |
| (tensile test) | | | | | | | | |
| elongation at break [%] | 14 | 16 | 16 | 10 | 12 | | 30 | 16 |
| tensile test | | | | | | | | |
| HDT [¤C] | 161 | 156 | 155 | 160 | 160 | 165 | 144 | 174 |

Of the test bars injection moulded according to examples III, IV, V and comparative example B, the cryogenic rupture faces were subjected to scanning electron microscopy (SEM) (Figures 1 through 4, respectively).

From this it is evident that in a composition containing only 2 wt.% of the block copolymer a much finer distribution of the polysulphone in the polyamide matrix is obtained than in the absence of the copolymer. At 4 wt.% the particle size of the polysulphone already is on the order of 1 µm.

An increase from about 4 wt.% to about 8 wt.% C2 has only a slight additional effect on the particle size. There is a clear relationship between particle size and impact resistance. In addition, the presence of the minor amount of block copolymer appears to significantly improve other mechanical properties of the composition, in particular the tensile strength and the elongation at break (tension) see comparative examples B and examples III to V inclusive.

For determination of the properties the following methods were used:

| | |
|---|---|
| Izod | ASTM D256 |
| flexural modulus | ASTM D790 |
| flexural strength | ASTM D790 |
| (bending test) | |
| tensile strength | ASTM D638 |
| (tensile test) | |
| elongation at break | ASTM D638 |
| HDT (1.8 MPa) | ASTM D648 |

## Claims

1. Polymer composition comprising (a) 5-95 parts by weight of polyamide, (b) 5-95 parts by weight of polyarylene polyether, with (a) + (b) = 100 parts by weight, and (c) a block copolymer of at least one polylactam and at least one polyarylene polyether, characterized in that component (c) is present in the composition in an amount of 0.5-8 wt.% relative to the total of (a) + (b) + (c).

2. Polymer composition according to claim 1, characterized in that 1-8 wt.% of component (c) is present in the composition.

3. Polymer composition according to either of claims 1 and 2, characterized in that the block copolymer is built up from poly-ξ-caprolactam blocks and polysulphone blocks.

4. Polymer composition according to claim 3, characterized in that the composition comprises 25-75 parts by weight of (a) and 75-25 parts by weight of (b).

5. Polymer composition according to any one of claims 1 to 4 inclusive, characterized in that component (a) is predominantly polyamide 4.6.

6. Polymer composition comprising:

(a) 25-75 parts by weight of polyamide 4.6

(b) 75-25 parts by weight of polysulphone

(c) 1-8 wt.% block copolymer of poly-ξ-caprolactam and polysulphone.

7. Product obtained by application of the polymer composition according to any one of claims 1 to 6 inclusive.

8. Polymer composition as described in the specification and the examples.

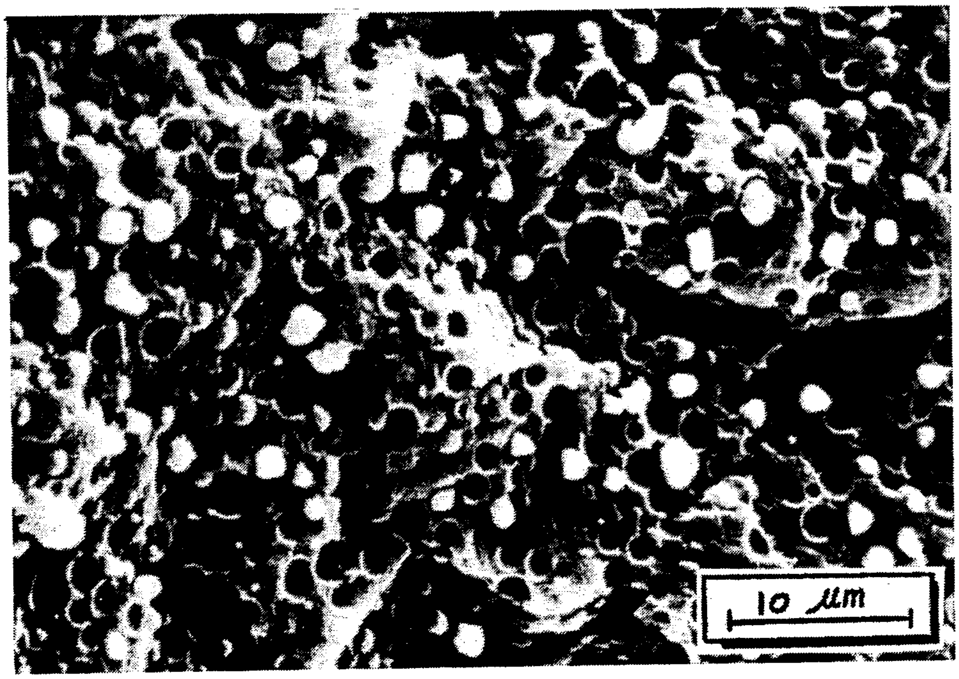


FIG. 1

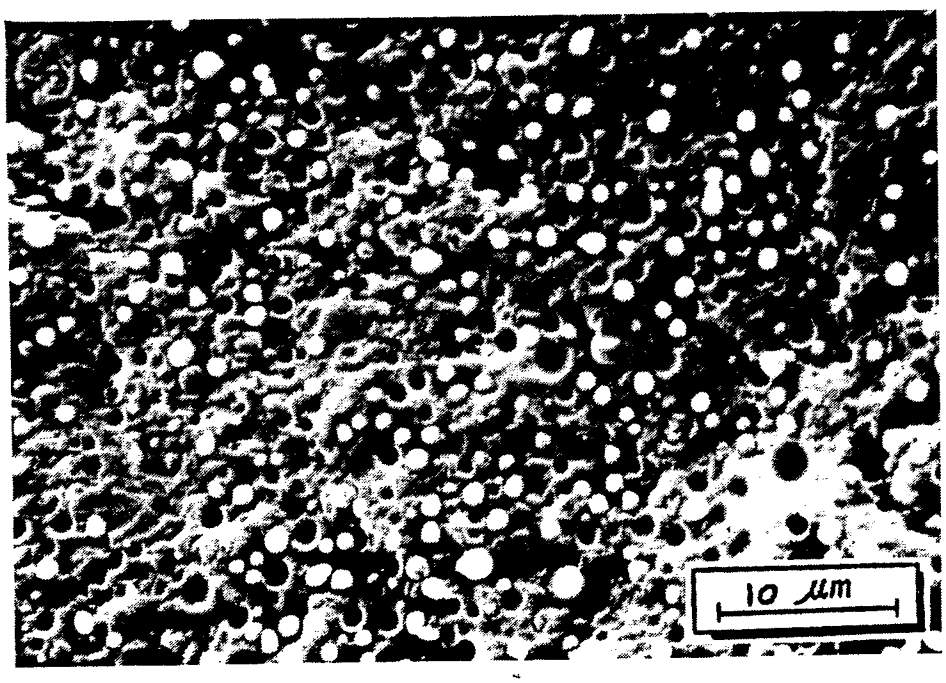


FIG. 2

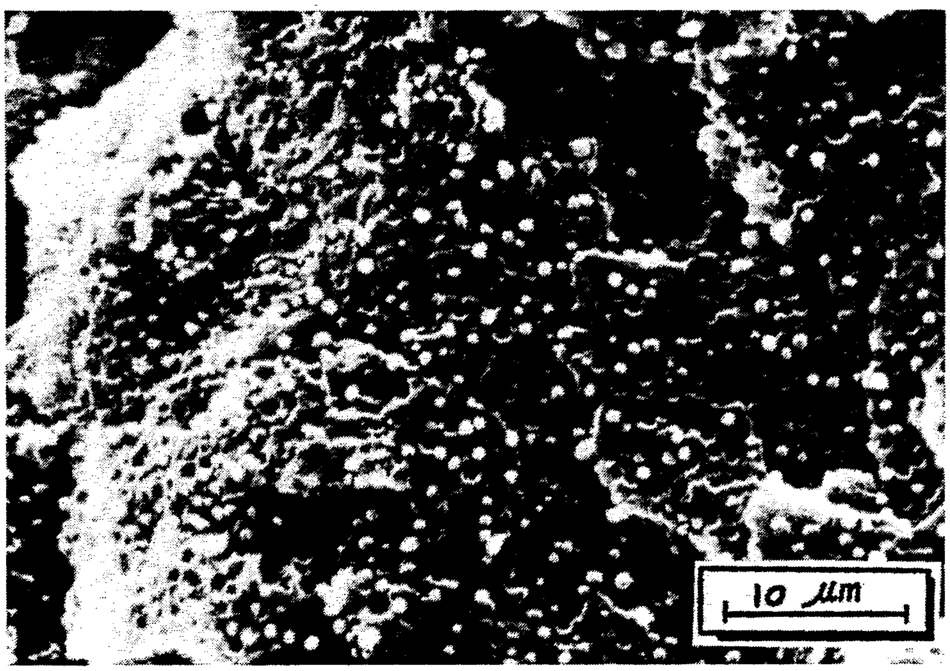


FIG. 3

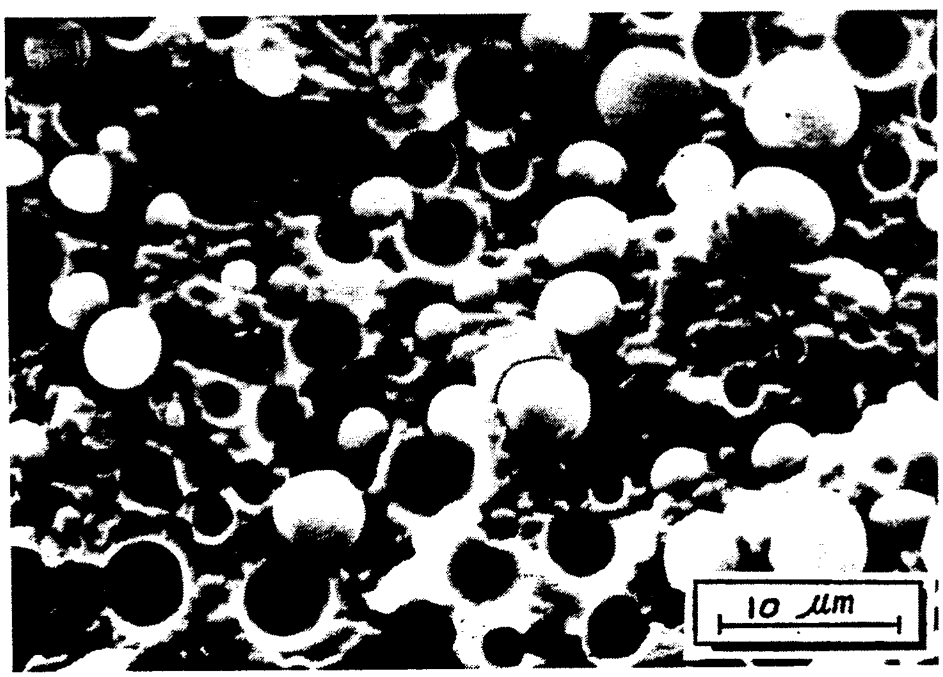


FIG. 4

European Patent Office

# EUROPEAN SEARCH REPORT

Application Number

EP 89 20 2879

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-3 655 822 (J.E. McGRATH et al.)<br>* Claims; column 4, lines 5-10 *<br>--- | 1 | C 08 G 69/42<br>C 08 L 77/00<br>C 08 L 71/12 |
| A | EP-A-0 260 123 (MITSUBISHI GAS CHEMICAL CO.)<br>* Claims; page 3, line 65; page 4, lines 1-8 *<br>----- | 1 | |
| | | | **TECHNICAL FIELDS SEARCHED (Int. Cl.5)** |
| | | | C 08 L |

The present search report has been drawn up for all claims

| Place of search | Date of completion of the search | Examiner |
|---|---|---|
| THE HAGUE | 01-03-1990 | PRAS J-L.C.N. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document